# EUROPÄISCHE PATENTSCHRIFT

(11) **EP 2 815 689 B1**
(45) Veröffentlichungstag und Bekanntmachung des Hinweises auf die Patenterteilung: **12.12.2018**
(21) Anmeldenummer: 14001024.0
(22) Anmeldetag: 20.03.2014
(51) Int. Cl.: A47L 15/48, D06F 58/24

(54) **Aerosoltrapping**
Aerosol trapping
Piégeage d'aérosol

(30) Priorität: 17.06.2013 DE 102013010039
(43) Veröffentlichungstag der Anmeldung: 24.12.2014
(73) Patentinhaber: Sanhua AWECO Appliance Systems GmbH, 88099 Neukirch (DE)
(72) Erfinder: Nenning, Peter, 88175 Scheidegg (DE); Elchholz, Heinz-Dieter, Dr., 58642 Iserlohn (DE)
(74) Vertreter: Otten, Roth, Dobler & Partner mbB Patentanwälte

(56) Entgegenhaltungen:
- EP-A1- 0 381 647
- EP-A1- 1 983 091
- EP-A2- 1 097 669
- WO-A1-97/38780
- WO-A2-2004/056448
- DE-A1-102010 047 058
- DE-A1-102011 117 734

## Beschreibung

Die Erfindung betrifft eine Haushaltsmaschine mit einer Trocknungsvorrichtung, wie ein Geschirrspüler, einen Wäschetrockner, eine Waschmaschine oder dergleichen nach dem Oberbegriff des Anspruchs 1.

Eine derartige Haushaltsmaschine wurde beispielsweise in der Druckschriften 10 2010 047 058 A1 oder DE 10 2011 117 734 A1 beschrieben.

Ein Problem bei der Realisierung einer solchen Haushaltsmaschine bzw. Trocknungsvorrichtung besteht darin, einerseits eine hohe Kontaktoberfläche zwischen der hygroskopischen Flüssigkeit und der zu trocknenden Luft vorzusehen und andererseits nach dem Entzug der Flüssigkeit aus der Luft die hygroskopische Flüssigkeit wieder einzusammeln und einem Vorratsdepot zuzuführen.

Die oberflächenvergrößernde Flüssigkeit führt zu immer kleineren Tröpfchen, die letztendlich ein Aerosol bilden können. Je kleiner die Flüssigkeitströpfchen sind, umso problematischer gestaltet sich die Abscheidung aus der getrockneten Luft.

Eine weitere Problematik bei der Realisierung einer solchen Trocknungsvorrichtung besteht darin, dass moderne Haushaltsmaschinen einen zunehmend geringeren Energieverbrauch aufweisen müssen, sodass keine großen Druckunterschiede bzw. Strömungswiderstände durch eine Flüssigkeitsabscheidevorrichtung verkraftbar sind. Diese Druckunterschiede würde eine entsprechend druckbeaufschlagte Förderung der zu trocknenden Luft bedingen, die wiederum aufwendig ist.

Aufgabe der Erfindung ist es daher, eine Vorrichtung nach dem Oberbegriff des Anspruchs 1 vorzuschlagen, bei der eine Abscheidung der Flüssigkeitströpfchen aus der zu trocknenden Luft ohne nennenswerte Druckdifferenzen im Luftkreislauf möglich ist.

Dies wird erfindungsgemäß durch die kennzeichnenden Merkmale des Anspruchs 1 erreicht.

Durch die in den Unteransprüchen genannten Maßnahmen sind vorteilhafte Ausführungen und Weiterbildungen der Erfindung möglich.

Dementsprechend zeichnet sich eine erfindungsgemäße Haushaltsmaschine dadurch aus, dass die Abscheideoberfläche der Trocknungsvorrichtung durch die Oberfläche der Wandung eines Luftkanals gebildet ist.

Durch diese Ausbildung ist eine Abscheidung der Flüssigkeit mit minimalem Druckverlust bzw. minimalem Strömungswiderstand in der Luftströmung möglich, sodass durch die Flüssigkeitsabscheidung der Energiebedarf der Haushaltsmaschine nicht erhöht wird.

Zugleich bietet die Wandung eines Luftkanals die Möglichkeit einer ausreichend großen Abscheideoberfläche, um die erforderliche Abscheidung der Flüssigkeit zu bewerkstelligen.

Bevorzugt wird hierbei die Ausdehnung der Abscheideoberfläche in Richtung der Luftströmung um ein Vielfaches gegenüber der Ausdehnung quer zur Richtung der Luftströmung gewählt. Durch diese Ausführung wird die Abscheideoberfläche vergrößert und zugleich die Kontaktseite der durchströmten Luft mit der Abscheideoberfläche ebenfalls vergrößert. Hierdurch ergibt sich eine bessere Abscheidung der Flüssigkeit.

Bevorzugt werden mehrere Luftkanäle mit Abscheideoberflächen aufweisenden Wandungen für die Abscheidung der Flüssigkeit vorgesehen. Auf diese Weise lässt sich die absolute Fläche der Abscheideoberflächen in der Summe vergrößern, ohne wiederum den Druckverlust bzw. den Strömungswiderstand nennenswert zu vergrößern. Durch eine solche Maßnahme lässt sich somit die Abscheidung der Flüssigkeit weiter verbessern, ohne dass der Energiebedarf der Haushaltsmaschine wesentlich ansteigt.

In einer bevorzugten Ausführungsform der Erfindung wird hierbei ein Bündel aus mehreren Röhrchen als Abscheideelement vorgesehen. Ein solches Röhrchenbündel kann vorteilhafterweise als im Ganzen handhabbares Abscheideelement ausgebildet werden und bei der Montage leicht ins Innere einer Rohrleitung entsprechend großen Durchmessers eingefügt werden. Ein solches Röhrchenbündel realisiert dabei die Luftströmung durch verschiedene Luftkanäle, das heißt die oben angeführten Vorteile der verbesserten Abscheidung ohne nennenswerte Beeinträchtigung der Druckverhältnisse bzw. des Strömungswiderstandes bleiben dabei erhalten.

Vorteilhafterweise wird ein solches Röhrchenbündel gegenüber einer horizontalen Ausrichtung geneigt angeordnet, sodass sich eine gravimetrisch bedingte Fließrichtung für die abgeschiedene Flüssigkeit ergibt.

Die so geneigte Anordnung einer Abscheideoberfläche ist nicht nur bei Verwendung eines Röhrchenbündels von Vorteil, sondern generell auch für jede erfindungsgemäß verwendete Kanalwandung, die eine Abscheideoberfläche bildet. Die geneigte Anordnung führt dazu, dass es eine ausgeprägte Fließrichtung für die abgeschiedene Flüssigkeit gibt, sodass die Rückführung der abgeschiedenen Flüssigkeit in einen Flüssigkeitsvorrat erleichtert ist.

In einer bevorzugten Ausführungsform der Erfindung werden ein oder mehrere Röhrchen mit Abscheideoberfläche, die insbesondere Bestandteil eines Röhrchenbündels sein können, an der gegenüber der horizontalen Ausrichtung nach unten geneigten Seite bzw. an dem nach unten geneigten Ende abgeschrägt. Hierdurch ergibt sich ein verbessertes Abtropfverhalten. Die Gefahr, dass sich Flüssigkeit in einem wesentlichen Bereich des Querschnitts eines solchen Röhrchens aufgrund der Oberflächenspannung oder anderer Effekte länger aufhält, ist damit reduziert oder ganz unterbunden. Durch diese Maßnahme bleibt der Querschnitt eines Abscheideröhrchens weitgehend offen.

Bevorzugt werden eine oder mehrere Abscheideoberflächen, insbesondere auch in einem Röhrchenbündel auch gegenüber der Vertikalen geneigt angeordnet. Hierdurch ist ein guter Kontakt mit aufsteigendem Aerosol bewirkt.

Dieser Effekt kann dadurch verbessert werden, dass die Unterseite eines abgeschrägten Röhrchens länger ist, als die Oberseite.

Auf diese Weise ergibt sich eine sich verjüngend auf ein Ende zulaufende Abtropfkante an der Unterseite des Röhrchens, wodurch wiederum das Abtropfverhalten verbessert ist.

Weiterhin hat es sich als vorteilhaft erwiesen, das Abscheideelement in einem Rohrknie innerhalb eines Luftrohrs anzuordnen. Das Umlenken der Luftströmung im Bereich des Abscheideelements verbessert das Kontaktverhalten der durchströmten Luft mit den zur Abscheidung vorgesehenen Oberflächen.

Dieser Effekt lässt sich weiter verbessern, indem beidseits des Abscheideelements ein Rohrknie in einem Luftrohr vorgesehen ist.

Eine Verbesserung der Erfindung lässt sich auch durch eine mehrstufige, d. h. in Strömungsrichtung hintereinander vorgesehene Anordnung von Abscheideelementen erzielen. Hierdurch ist eine Vergrößerung der Abscheideoberfläche mit geringeren Druckverlusten gegenüber einem durchgehenden Abscheideelement möglich. Zudem können die verschiedenen Stufen an die Art des eintretenden Aerosols, z. B. an die Tröpfchengröße angepasst werden. Eine solche Anpassung kann z. B. durch unterschiedliche Geometrien vorgenommen werden.

Ein Ausführungsbeispiel der Erfindung ist in der Zeichnung dargestellt und wird anhand der Figuren nachfolgend näher erläutert.

Im Einzelnen zeigen:
- Figur 1: einen schematischen Aufbau der Trocknungsvorrichtung einer erfindungsgemäßen Haushaltsmaschine,
- Figur 2: einen schematischen Längsschnitt durch ein Luftrohr mit Abscheideelement gemäß der Erfindung,
- Figur 3: eine Ausschnittsvergrößerung aus Figur 2 und
- Figur 4: ein schematischer Ausschnitt eines Querschnitts eines Abscheideelements gemäß Figur 2.

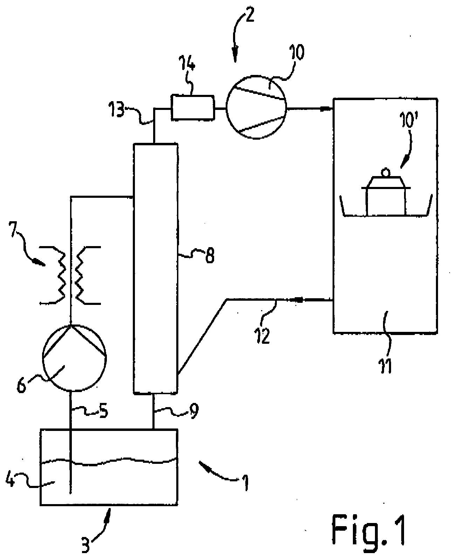

Figur 1 zeigt einen Primärkreislauf 1 sowie einen Sekundärkreislauf 2 für einen Geschirrspüler. Der Primärkreislauf 1 umfasst eine hygroskopische Flüssigkeit, beispielsweise eine Lithiumchloridlösung. Der Sekundärkreislauf 2 stellt einen Luftkreislauf dar.

Der Primärkreislauf 1 umfasst dabei einen Behälter 3, beispielsweise mit Lithiumchloridlösung 4. Die Lithiumchloridlösung 4 kann über eine Leitung 5 mittels einer Pumpe 6, welche als Umwälzpumpe ausgestaltet ist, abgesaugt werden. Die Lösung wird über eine Heizung 7 erwärmt, wodurch Feuchtigkeit entweichen kann und somit das Entzugsmittel, nämlich Lithiumchloridlösung 4 aufkonzentriert werden kann. Die Elektrolytlösung 4 gelangt schließlich in eine Kontaktkammer 8, in der der Primärkreislauf 1 mit dem Sekundärkreislauf 2 verbunden ist. In der Kontaktkammer 8 kommt somit die hygroskopische Flüssigkeit, beispielsweise Lithiumchloridlösung in Kontakt mit der zu trocknenden Luft.

Der Sekundärkreislauf 2 bläst die Trocknungsluft mittels eines Gebläses 10 in den Arbeitsraum 11 des Geschirrspülers, wo sie feuchtes Geschirr 10' in einem Geschirrkorb trocknet. Aus dem Arbeitsraum 11 wird die Trocknungsluft innerhalb des Sekundärkreislaufs 2 durch den Strömungsantrieb des Gebläses 10 über die Leitung 12 abgesaugt und gelangt in die Kontaktkammer 8.

Dabei wird der Trocknungsluft über das Entzugsmittel, das heißt die hygroskopische Flüssigkeit Feuchtigkeit entzogen. Das Entzugsmittel 4 erwärmt sich bei diesem exothermen Vorgang und kann dabei auch wiederum die Trocknungsluft erwärmen.

Über die Luftleitung 13 gelangt die Trocknungsluft zusammen mit Tröpfchen des Entzugsmittels in den Abscheider 14, der erfindungsgemäß die Wandung eines Luftkanals als Abscheideroberfläche nutzt.

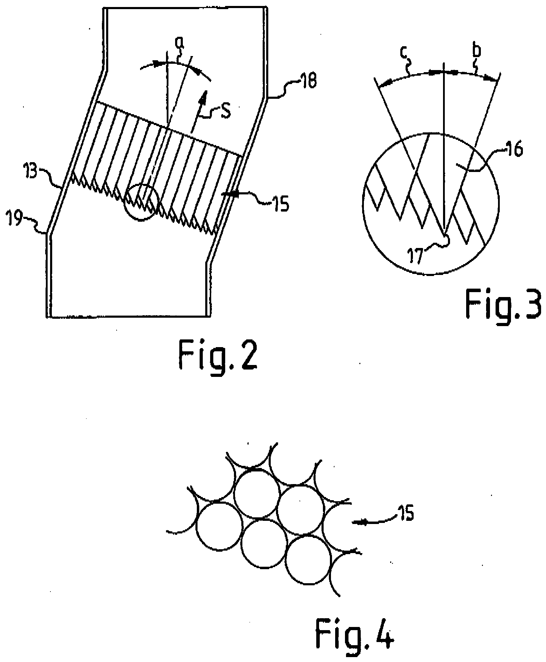

In den bevorzugten dargestellten Ausführungsformen gemäß den Figuren 2 bis 4 wird hierbei innerhalb der Luftleitung 13 ein Röhrchenbündel 15 als Abscheideelement verwendet. In Figur 4 ist der Querschnitt eines solchen Röhrchenbündels teilweise dargestellt, sodass anschaulich klar wird, dass hierbei eine Vielzahl von Luftkanälen in Strömungsrichtung S angeordnet ist. Diese Art eines Abscheideelementes in Form eines Röhrchenbündels 15 reduziert den Luftwiderstand kaum und verursacht somit kaum Druckdifferenzen.

Gleichzeitig weist jedes Röhrchen eine Länge auf, die ein Vielfaches des Durchmessers beträgt, sodass zum einen eine große Kontaktfläche als Abscheideoberfläche und zum anderen eine hohe Kontaktzeit für die durchströmende Luft gegeben ist.

Das Röhrchenbündel 15 ist bezüglich der Horizontalen geneigt angeordnet, sodass sich eine gravimetrisch bedingte Fließrichtung für abgeschiedene Flüssigkeit nach unten ergibt.

Am Ende der Röhrchen sind diese abgeschrägt, wie insbesondere in der Ausschnittsvergrößerung gemäß Figur 3 ersichtlich ist.

In Figur 3 ist weiterhin ersichtlich, dass die Röhrchen des Röhrchenbündels 15 auch gegenüber der Vertikale um einen Winkel b geneigt sind. In der dargestellten Ausführungsform ist ersichtlich, dass die Schräge, mittels der das Röhrchen 16 abgeschrägt ist, derart angebracht ist, dass die Öffnung des Röhrchens gegenüber der Vertikalen um einen gegenüber dem Winkel b größeren Winkel c geneigt ist. Durch die Röhrchenanordnung sowie die Anordnung der Schräge fließt somit abgeschiedene Flüssigkeit bis zum untersten Ende des Röhrchens, das sich in der Seitenansicht als Spitze 17 darstellt. Dort kann somit eine optimale Tropfenbildung stattfinden, wobei die Tropfen senkrecht nach unten abtropfen können.

Wie in Figur 2 ersichtlich, ist beidseits des Röhrchenbündels 15 jeweils ein Rohrknie 18, 19 angeordnet, sodass die komplette Luftströmung durch den Abscheider 14 zweifach, das heißt vor und hinter dem Abscheideelement 15 abgelenkt wird. Hierdurch lässt sich die Abscheidung feiner Tröpfchen im Abscheider 14 verbessern.

Die Erfindung ist nicht auf das dargestellte Ausführungsbeispiel beschränkt, insbesondere ist die Anordnung eines erfindungsgemäßen Abscheiders 14 nicht auf eine Kreislaufführung wie in Figur 1 beschränkt. Insbesondere kann die Kontaktkammer 8 beliebig ausgestaltet sein. Auch mechanische Verteilerelemente können beispielsweise zur Verteilung des Entzugsmittels 4 in dieser Kammer angeordnet sein. Die beiden Kreisläufe 1 und 2 stellen nur ein Beispiel für die Verwendung einer hygroskopischen Flüssigkeit zur Trocknung von Luft in einer Haushaltsmaschine dar.

Wesentlich bei der Erfindung ist jedoch vielmehr die erfindungsgemäße Ausgestaltung eines Abscheiders, in dem die Wandungen eines oder mehrerer Luftkanäle als Abscheideoberflächen verwendet werden.

### Bezugszeichenliste:

- 1: Primärkreislauf
- 2: Sekundärkreislauf
- 3: Behälter
- 4: Lithiumchloridlösung
- 5: Leitung
- 6: Pumpe
- 7: Heizung
- 8: Kontaktkammer
- 9: Flüssigkeit
- 10: Gehäuse
- 11: Arbeitsraum
- 12: Luftleitung
- 13: Luftleitung
- 14: Abscheider
- 15: Röhrchenbündel
- 16: Röhrchen
- 17: Spitze
- 18: Rohrknie
- 19: Rohrknie

## Patentansprüche

1. Haushaltsmaschine mit einer Trocknungsvorrichtung, wie ein Geschirrspüler, ein Wäschetrockner, eine Waschmaschine oder dergleichen, wobei eine Kontaktzone (8) zum Entziehen von Feuchtigkeit aus Luft, die aus einem Arbeitsraum (11) der Haushaltsmaschine stammt, mittels Kontaktes der Luft mit einer hygroskopischen Flüssigkeit (4) in einem Kontaktraum (8) vorgesehen ist und wobei ein Abscheideelement (14) zum Abscheiden hygroskopischer Flüssigkeit aus der Luft vorhanden ist, **dadurch gekennzeichnet, dass** eine Abscheideoberfläche des Abscheideelements (14) durch die Oberfläche der Wandung eines Luftkanals (14) in Strömungsrichtung hinter dem Kontaktraum (8) gebildet ist und dass über eine Luftleitung (13) die zu trocknende Luft zusammen mit Tröpfchen der hygroskopischen Flüssigkeit (4) in das Abscheideelement (14) gelangt.

2. Haushaltsmaschine nach einem der vorgenannten Ansprüche, **dadurch gekennzeichnet, dass** die Ausdehnung der Abscheideoberfläche in Richtung der Luftströmung ein Vielfaches der Ausdehnung quer zur Richtung der Luftströmung beträgt.

3. Haushaltsmaschine nach einem der vorgenannten Ansprüche, **dadurch gekennzeichnet, dass** mehrere Luftkanäle (15) mit Abscheideoberflächen aufweisenden Wandungen für die Abscheidung der Flüssigkeit vorgesehen sind.

4. Haushaltsmaschine nach einem der vorgenannten Ansprüche, **dadurch gekennzeichnet, dass** ein Bündel (15) aus mehreren Röhrchen als Abscheideelement vorgesehen ist.

5. Haushaltsmaschine nach einem der vorgenannten Ansprüche, **dadurch gekennzeichnet, dass** ein Röhrchenbündel (15) gegenüber einer horizontalen Ausrichtung geneigt angeordnet ist, sodass sich eine gravimetrisch bedingte Fliessrichtung für die abgeschiedene Flüssigkeit ergibt.

6. Haushaltsmaschine nach einem der vorgenannten Ansprüche, **dadurch gekennzeichnet, dass** ein oder mehrere Röhrchen (15, 16) an dem nach unten geneigten Ende abgeschrägt sind.

7. Haushaltsmaschine nach einem der vorgenannten Ansprüche, **dadurch gekennzeichnet, dass** die Unterseite eines abgeschrägten Röhrchens des Röhrchenbündels länger ist, als die Oberseite.

8. Haushaltsmaschine nach einem der vorgenannten Ansprüche, **dadurch gekennzeichnet, dass** eine oder mehrere Abscheideelemente eine Abtropfkante aufweisen.

9. Haushaltsmaschine nach Anspruch 1, **dadurch gekennzeichnet, dass** die Abtropfkante angespitzt oder angeschrägt ist.

10. Haushaltsmaschine nach einem der vorgenannten Ansprüche, **dadurch gekennzeichnet, dass** das Abscheideelement in einem Rohrknie (18, 19) innerhalb eines Luftrohrs angeordnet ist.

11. Haushaltsmaschine nach einem der vorgenannten Ansprüche, **dadurch gekennzeichnet, dass** beidseits des Abscheideelements ein Rohrknie (18, 19) in einem Luftrohr vorgesehen ist.

## Claims

1. A domestic appliance having a drying device, such as a dishwasher, a tumble dryer, a washing machine or the like, wherein a contact zone (8) is provided for extracting moisture from the air originating from the operating area (11) of the domestic appliance through contact of the air with a hygroscopic liquid (4) in a contact chamber (8) and wherein a separating element (14) for separating hygroscopic liquid from the air is provided, **characterised in that** a separating surface of the separating element (14) is formed in the direction of flow behind the contact chamber (8) by the surface of the wall of an air duct (14) and **in that** the air to be dried enters the separating element (14) together with drops of the hygroscopic liquid (4) via an air line (13).

2. The domestic appliance according to one of the preceding claims, **characterised in that** the expansion of the separating surface in the direction of the air flow amounts to a multiple of the expansion transversely to the direction of the air flow.

3. The domestic appliance according to one of the preceding claims, **characterised in that** a plurality of air ducts (15) comprising walls having separating surfaces for the separation of the liquid are provided.

4. The domestic appliance according to one of the preceding claims, **characterised in that** a cluster (15) of a plurality of tubes is provided as the separating element.

5. The domestic appliance according to one of the preceding claims, **characterised in that** a tube cluster (15) is arranged inclined with respect to a horizontal alignment, such that a gravimetric direction of flow is produced for the separated liquid.

6. The domestic appliance according to one of the preceding claims, **characterised in that** one or more tubes (15, 16) are bevelled at the downwardly inclined end.

7. The domestic appliance according to one of the preceding claims, **characterised in that** the underside of a bevelled tube of the tube cluster is longer than the upper side.

8. The domestic appliance according to one of the preceding claims, **characterised in that** one or more separating elements have a drip edge.

9. The domestic appliance according to claim 1, **characterised in that** the drip edge is pointed or bevelled.

10. The domestic appliance according to one of the preceding claims, **characterised in that** the separating element is arranged in a pipe elbow (18, 19) within an air pipe.

11. The domestic appliance according to one of the preceding claims, **characterised in that** a pipe elbow (18, 19) is provided in an air pipe on both sides of the separating element.

## Revendications

1. Appareil ménager comprenant un dispositif de séchage, comme un lave-vaisselle, un sèche-linge, une machine à laver ou analogue, dans lequel une zone de contact (8) est prévue pour extraire l'humidité de l'air, qui provient d'un espace de travail (11) de l'appareil ménager, au moyen d'une mise en contact de l'air avec un liquide hygroscopique (4) dans un espace de contact (8) et dans lequel un élément séparateur (14) est disponible pour séparer le liquide hygroscopique de l'air, **caractérisé en ce qu'**une surface de séparation de l'élément séparateur (14) est formée par la surface de la paroi d'un conduit d'air (14) derrière l'espace de contact (8) dans la direction de l'écoulement et **en ce que** l'air à sécher, conjointement avec des gouttelettes du liquide hygroscopique (4), arrive par le biais d'une conduite d'air (13) dans l'élément séparateur (14).

2. Appareil ménager selon une des revendications précédentes, **caractérisé en ce que** l'étendue de la surface de séparation dans la direction de l'écoulement d'air équivaut à un multiple de l'étendue transversalement à la direction de l'écoulement d'air.

3. Appareil ménager selon une des revendications précédentes, **caractérisé en ce que** plusieurs conduits d'air (15) sont prévus, avec des parois présentant des surfaces de séparation pour la séparation du liquide.

4. Appareil ménager selon une des revendications précédentes, **caractérisé en ce qu'**un faisceau (15) de plusieurs petits tubes est prévu en guise d'élément séparateur.

5. Appareil ménager selon une des revendications précédentes, **caractérisé en ce qu'**un faisceau de petits tubes (15) est disposé par rapport à une direction horizontale de sorte qu'il en résulte pour le liquide séparé une direction de flux conditionnée par la gravité.

6. Appareil ménager selon une des revendications précédentes, **caractérisé en ce qu'**un ou plusieurs petits tubes (15, 16) sont chanfreinés sur l'extrémité inclinée vers le bas.

7. Appareil ménager selon une des revendications précédentes, **caractérisé en ce que** la face inférieure d'un petit tube chanfreiné du faisceau de petits tube est plus longue que la face supérieure.

8. Appareil ménager selon une des revendications précédentes, **caractérisé en ce qu'**un ou plusieurs éléments séparateurs présentent un bord d'égouttage.

9. Appareil ménager selon la revendication 1, **caractérisé en ce que** le bord d'égouttage est affûté ou biseauté.

10. Appareil ménager selon une des revendications précédentes, **caractérisé en ce que** l'élément séparateur est disposé dans un coude tubulaire (18, 19) à l'intérieur d'un tube à air.

11. Appareil ménager selon une des revendications précédentes, **caractérisé en ce qu'**un coude tubulaire (18, 19) est prévu des deux côtés de l'élément séparateur dans un tube à air.
